Europäisches Patentamt

European Patent Office

Office européen des brevets

(11) Publication number: **0 451 457 A2**

# EUROPEAN PATENT APPLICATION

(21) Application number: 91101893.5

(51) Int. Cl.5: **G11B 5/71**

(22) Date of filing: **11.02.91**

(30) Priority: **30.03.90 JP 86540/90**

(43) Date of publication of application:
**16.10.91 Bulletin 91/42**

(84) Designated Contracting States:
**DE FR GB NL**

(71) Applicant: **MATSUSHITA ELECTRIC
INDUSTRIAL CO., LTD.
1006, Oaza Kadoma
Kadoma-shi, Osaka-fu, 571(JP)**

(72) Inventor: **Goto, Yoshiki
2-14-11, Takatsukadai, Kawai-cho
Kitakatsuragi-gun, Nare Prefecture 636(JP)**
Inventor: **Honda, Kazuyoshi
5-34, Johan-cho 1-chome
Takatsuki City, 569(JP)**

Inventor: **Kawawake, Yasuhiro
1-A1-213, Satakedai 1-chome
Suita City, 565(JP)**
Inventor: **Sugita, Ryuji
8-7 Ogura-cho
Hirakata City, 573(JP)**
Inventor: **Tohma, Kiyokazu
26-5 Ikaga-nishimachi
Hirakata City, 573(JP)**
Inventor: **Ishida, Tatsuaki
998-3-3-1421, Nakamozu-cho 6-cho
Sakai City, 591(JP)**

(74) Representative: **Jung, Elisabeth, Dr. et al
Dr. Elisabeth Jung Dr. Jürgen Schirdewahn
Dipl.-Ing. Claus Gernhardt Patentanwälte
Clemensstrasse 30 Postfach 40 14 68
W-8000 München 40(DE)**

(54) **Magnetic recording medium.**

(57) A magnetic recording medium which is improved in durability by having smooth runability and high wear resistance, is obtained by forming a metal oxide film including CoO and a lubricant film of alkyl silane compound on the thin metal film type magnetic recording medium of CoCr or the like.

The metal oxide film is a thin film including metal oxide of mainly Co, and the alkyl silane compound is composed by a linear or branched alkyl chain and silyl group. So, there is such synergetiv effect of combination of improved wear resistance owing to the metal oxide film and improved frictional performance of the alkyl silane compound having large bonding strength with the metal oxide that the magnetic recording medium having improved durability is realized.

FIGURE

Rank Xerox (UK) Business Services

## FIELD OF THE INVENTION AND RELATED ART STATEMENT

### 1. FIELD OF THE INVENTION

The present invention relates to a magnet recording medium which is applicable to various devices in information industry, and has improved frictional performance and wear resistance.

### 2. DESCRIPTION OF THE RELATED ART

In order to make a high density recording, a thin metal film type magnetic recording medium has been investigated. And in the thin metal film type magnetic recording medium, a magnetic recording metal film is formed on a substrate by a direct plating method, a sputtering method, a vacuum deposition method, an ion plating method or the like. The magnetic recording metal film makes direct contact with a magnetic head, a cylinder and so on, in recording/reproducing of signals.

Therefore, friction and wear are likely to occur and it results in such undesirable problems that fine powder of the magnetic recording metal film material is produced and damage of the magnetic recording medium occurs.

In order to avoid the above-mentioned problems caused by contact of the magnetic recording medium with the magnetic head and the like, there have been various investigations made for improvement of frictional performance and wear resistance of the magnetic recording medium. For instance, a lubrication treatment on the surface of the magnetic recording medium is disclosed in the gazette of the Japanese published unexamined patent application (Tokkai) sho 64-73530, or it is proposed that the surface of the magnetic recording medium is coarsened.

In these investigations, improvement of smooth runability and protection of damage have been achieved to a certain extent, but exfoliation of the lubricant film is not avoidable owing to increased running times of the magnetic recording medium, or it is difficult to make the most suitable coarse surface of the recording medium. Thereby runability of the magnetic recording medium is not stable and damage thereof is likely to occur. Thus satisfactory improvement of frictional performance and wear resistance have not been achieved.

## OBJECT AND SUMMARY OF THE INVENTION

The present invention is intended to solve the above-mentioned problems, and purpose of the present invention is to provide a magnetic recording medium having improved frictional performance and wear resistance about the magnetic recording medium which has a thin metal film type magnetic recording film on a non-magnetic substrate.

These objects are accomplished by a magnetic recording medium comprising:

a non-magnetic substrate;

a magnetic thin film formed on the non-magnetic substrate;

a protective film of an oxide film including Co formed on the magnetic thin film; and

a lubricant film including a long-chain alkyl silane.

In the magnetic recording medium of the present invention, when the magnetic recording medium is running, there is such synergetic effect of combination of improved wear resistance owing to the oxide film including Co as the protective film and of improved frictional performance of the lubricant film containing a long-chain alkyl silane compound formed on the protective film. The synergetic effect is that both smooth runability onto the mechanical parts such as heads, posts, a cylinder and good condition of a contact resulting in reduced wear of the tape are obtained, and thus the magnetic recording medium having improved durability is realized. Especially, the long-chain alkyl silane compound used in the lubricant film includes silyl group which combines with metal oxide in the oxide film so firmly that undesirable exfoliation of the lubricant film owing to repeated running is considerably reduced in the magnetic recording medium.

While the novel features of the invention are set forth particularly in the appended claims, the invention, both as to organization and content, will be better understood and appreciated, along with other objects and features thereof, from the following detailed description taken in conjunction with the drawings.

## BRIEF DESCRIPTION OF THE DRAWINGS

Attached figure is a cross-sectional view of a magnetic recording medium embodying the present invention.

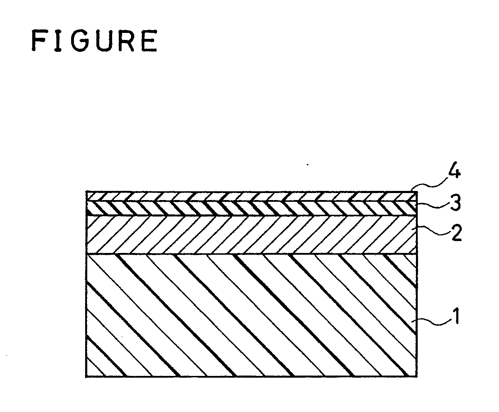

It will be recognized that the figure is schematic representation for purposes of illustration and does not necessarily depict the actual relative size or location of the elements shown.

**DESCRIPTION OF THE PREFERRED EMBODIMENTS**

The present invention is elucidated in detail with reference to the accompanying drawing. Figure is a cross-sectional view of a magnetic recording medium embodying the present invention. A magnetic recording film 2 is formed on a non-magnetic substrate 1, a protective film 3 containing oxidized metal including Co is formed on the magnetic recording film 2 and a lubricant film 4 containing a long-chain alkyl silane compound is formed on the protective film 3.

Suitable film, sheet or the like for the non-magnetic substrate 1 used in the magnetic recording medium of the present invention is made by selecting from the following known materials: high polymer such as polyamide, polyimide, polysulfone, polycarbonate, polypropylene, polyethylene, poly(ethylene terephthalate), poly(cellulose acetate), poly(vinyl acetate) and the like; non-magnetic metal; ceramics such as glass, porcelain and the like.

Suitable materials for forming the magnetic recording film 2 is as follows: at least one metal selected from Fe, Co, and Ni, an alloy thereof with Mn, Cr, Ti, P, Y, Sm, Bi and the like or an alloy with oxidized the same. Among these materials, at least two elements selected from Co, Cr and Ni is preferable for composing the magnetic recording film, since it has high magnetic anisotrophy and corrosion resistance. The magnetic recording film is formed by the following known methods: a vapor deposition, a sputtering, an ion plating, a plating or the like. The magnetic recording film 2 used in the present invention can be made from the other materials as mentioned above.

The protective film 3 is made of CoO or formed by a Co oxide film including at least one member selected from Ni or Cr. The Co oxide film is most preferable since it has high scratching resistance owing to its high strength and is advantageous for combination with below-mentioned lubricating compounds.

The lubricant film 4 is made by using at least one linear or branched long-chain alkyl silane compound as a lubricating compound which has less than 3 alkyl chains having 16 --- 24 carbon atoms and further has a silane compound at its one end. And the silane compound includes a hydroxy group, halogen atoms, carboxy group, carboalkoxy group, phenoxy group, or an alkoxy group such as a methoxy, an ethoxy, a propoxy and the like which combines with a silyl group showing large bonding strength with metal oxide in the protective film 3. The silyl group contained in the above-mentioned silane compound firmly combines with metal oxide in the protective film. It was mentioned on page 389 in "Tribology of electric material" by KOHNO et al. published by RIARAIZU SHA (JAPAN) 1989.

The linear or branched long-chain alkyl silane compound used in the lubricant film of the present invention can be chosen from the following compound: a linear long-chain alkyl silane compound such as an ethoxy silane including an n-heptadecyl, an n-pentadecyl, an n-octadecyl, an n-eicocyl or the like, a r-(N-octadecyl succinyl amino) propyl triethoxysilane and the like; a two-branched type long-chain alkyl silane compound such as a r-(N, N-dioctadecyl succinyl amino) propyl triethoxysilane and the like; a three-branched type long-chain alkyl silane compound such as a r-[N-[tris (heptadecyloxymethyl)] methyl succinyl amino] propyl triethoxysilane and the like. These compounds are preferable because having properties of easy handling, easy obtainment, reasonable price and easy forming into a film. Further, the two-branched type long chain alkyl silane compound is more preferable, because packing density of both the silyl group and the alkyl chain in this compound are almost the same, and it results in more improved packing density of the protective film.

As mentioned above, about the thin metal film type magnetic recording medium formed on the non-magnetic substrate, improved frictional performance and wear resistance are realized by forming the protective film of Co oxide including metal oxide and further forming the lubricant film containing the long-chain alkyl silane compound on the protective film.

Hereafter, several experiments as to the present invention are elucidated in detail.

[ Experiment 1 ]

Tape samples of Example 1 and comparison examples 1 and 2 are made by the following procedure: STEP(a) CoCr (Co:Cr = 80:20 in ratio of atoms) is deposited on a 7.5 $\mu$ m thick polyimide film (having 150 mm width) as the non-magnetic substrate by a continuous vapor deposition method to form a 1500 Å thick CoCr film as the magnetic recording film under the following condition shown in Table 1.

3

## Table 1

| Deposition rate | 1000 $\overset{\circ}{A}$/sec |
|---|---|
| Temperature of the substrate | 250 ℃ |
| Pressure | 2.5 × 10$^{-5}$ Torr |

And the Comparison-example 1 was obtained in the same step.

STEP(b) Co oxide is deposited on the CoCr film by vapor deposition of Co in an oxygen-containing atmosphere to form a 200 Å thick Co oxide film under the following condition shown in Table 2. The thickness of 200 Å was obtained by the AES (Auger Electron Spectroscopy).

## Table 2

| Deposition rate | 800 $\overset{\circ}{A}$/sec |
|---|---|
| Temperature of the substrate | 110 ℃ |
| Oxygen introducing rate | 3 l/min |
| Pressure | 2 × 10$^{-4}$ Torr |

STEP(c) A coating material for the lubricant film was applied on the Co oxide film at a tape speed of 10 m/min and dried at 100°C to form a lubricant film. And the coating material was prepared by solving 1000 ppm of r-(N, N-dioctadecyl succinyl propyl amino) triethoxysilane which is one of long-chain alkyl silane compounds, in iso-propyl alcohol. The Example 1 was obtained in this step (c).

STEP(d) In this step (d), the Comparison example 2 was made by the same way as the STEP (c) except that a comparison coating material for the lubricant film was applied on the Co oxide film instead of the above-mentioned coating material. And the comparison coating material was prepared by using a stearic acid in a carboxylic acid group.

The Example and Comparison examples were split to give tape samples (8 mm width, 3 m length).

The following evaluation test as to running was made on different tape sample obtained in the foregoing example and comparison examples.

Repeating 50 transits runnings by each tape samples were made by a known sailing instrument having strain meters. Measurements of dynamic frictional coefficient (hereinafter it is abbreviated $\mu$k) were made at first transit and after repeating 50 transits, and the surface of each tape samples was observed. Condition as to running by the sailing instrument is as follows:

The tape sample was wound on and around a post (4ø × 52 mm length) made of SUS304-stainless steel at a winding angle of 180°; tension was 20 gf; and running speed was 18 mm/sec.

The following results were obtained:

As to the Comparison example 1;

Since the Comparison example 1 did not have the Co oxide film and the lubricant film, the valve of $\mu$k was so high that $\mu$k was 0.5 --- 0.6 even before running, the strong stick slip condition was shown, squeaking touch on the posts occurred and/or rotation of reels was stopped, those were owing to considerable poor frictional performance. And further, the wear resistance of the Comparison example 1 was so poor that remarkable damage on the surface of the tape was observed after repeating only two transits running.

As to the Example 1;

The example 1 which had both Co oxide film and the lubricant film of r-(N, N-dioctadecyl succinyl propyl amino) triethoxysilane in silane group, produced no squeaking, and wherein $\mu$k was about 0.23 before and after running, stable runability was observed in repeating 50 transits running and little damage on the surface was observed. Thus, improved frictional performance and wear resistance were obtained by the Example 1.

As to the Comparison example 2;

In the comparison example 2 which had both Co oxide film and the lubricant film of the stearic acid in calbonic acid group, squeaking in running was decreased, but $\mu$k began to increase even after repeating 10 --- 20 transits of running, it would result from invisible exfoliation of the lubricant film. Thus the comparison example 2 was no good.

From the above-mentioned results, the magnetic recording medium having improved frictional performance and wear resistance was obtained by forming the Co oxide film on the magnetic recording film and further forming the lubricant film including a long-chain alkyl silane compound. This result was seemed to be obtained by a synergetic effect of combination of the effect of the Co oxide as the strong protective film and the effect of smooth friction owing to the the long-chain alkyl silane compound as the lubricant film, wherein the long-chain alkyl silane compound has strong power for combining with the protective film.

[ Experiment 2 ]

Many examples of magnetic recording medium were formed by using a plural kinds of alkyl silane compounds shown in Table 3 for the lubricant film. These examples were formed by the same way of forming the Example 1 except that the alkyl silane compound for the lubricant film was changed in each examples. These examples were split to give tape samples (8 mm width, 40 mm length)

An evaluation test as to sliding was made on different tape samples obtained in the foregoing examples by a Bowden-Tabor Type Friction Tester of a type "DF-PM" manufactured by KYOWAKAIMENKAGAKU Co., Ltd. JAPAN. And measurement of $\mu$k and observation of the surface were made by repeating 200 transits slidings of each tape samples by the tester. Condition as to sliding by the tester was as follows; the tape sample was slidden on a slider (10 mm × 10 mm) made of SUS304-stainless steel; load weight was 10 gf; distance of sliding was 20 mm; and sliding speed was 1 mm/sec. The results of the test are shown in Table 3.

5

Table 3

| Examples | Long-chain alkyl silane | $\mu k$ | |
|---|---|---|---|
| | | 1st transit | After repeating 200 transits |
| Example 4 | n-octadecyl trimethoxysilane | 0.22 | 0.23 |
| Example 5 | $\gamma$-( N-octadecyl succinylamino )propyl triethoxysilane | 0.23 | 0.23 |
| Example 6 | $\gamma$-( N,N-diheptadecyl succinylamino )propyl triethoxysilane | 0.20 | 0.19 |
| Example 7 | $\gamma$-[ N-( heptadecyl oxymethyl )methyl succinyl amino ]propyl triethoxysilane | 0.19 | 0.21 |
| Example 8 | $\gamma$-[ N-( octadecyl oxymethyl )methyl succinyl amino ]propyl trimethoxysilane | 0.16 | 0.17 |

As shown in the Table 3, small value of $\mu k$ and improved runability were obtained in each examples of the magnetic recording medium having lubricant film 3 formed by using a linear, two-branched or three-branched type long-chain alkyl silane compound on the protective film of metal oxide including Co oxide. Damage observed on the surface of these examples was very little even after repeating 200 transits slidings, so that the magnetic recording medium having improved wear resistance was obtained.

[ Experiment 3 ]

Many examples of the magnetic recording medium were formed under different procedure and by using different material as mentioned below:

STEP (h): The magnetic recording film of CoCr (wherein 20 --- 30 wt % of Cr was observed by the atomic absorption spectrometry) was formed on 7.5 $\mu$m thick polyimyde film (Examples 9 --- 13) or on 10 $\mu$m thick polyimyde film (Examples 14 --- 18). Next a metal oxide film as the protective film was formed by the following STEP (i) or STEP (j)

STEP (i): The protective film was formed by oxidation of the surface of the magnetic recording film at 300 $^\circ$C in the air (atmosphere) (Examples 11 --- 15).

STEP (j): In an oxygen-containing atmosphere, 200 Å --- 500 Å thick protective film was formed by vapor deposition

of Co (Example 9);

of Co and Cr (Co:Cr = 95:5 in ratio of atoms) (Examples 16 and 17); or

of Co and Cr (Co:Cr = 90:10 in ratio of atoms) (Example 18).

STEP (k): The lubricant film was formed by applying a plural kind of alkyl silane compounds in the same way shown in the experiment 1 to make the magnetic recording medium as shown in the Table 4. And these examples were spilt to give tape samples.

The following evaluation tests were made on different tape sample obtained in the foregoing examples.

(1) Surface roughness:

Surface roughness was measured by a surface meter "TARI SAUFU model 500 A" manufactured by TOKYO SEIMITU Inc. JAPAN. And all examples showed less than 0.02 $\mu$m of surface roughness.

(2) Scratching resistance:

The scratching resistance was measured by a scratch tester "Type HEIDON 18" manufactured by SHINTO KAGAKU Inc. JAPAN (wherein a scratching piece of sapphire (30 R × 1 mm) is used with a scratching speed of 100 mm/min). And all examples showed more than 500 gf of scratching resistance.

(3) Dynamic frictional coefficient ($\mu$k):

The dynamic frictional coefficient $\mu$k was measured by the same sailing instrument used as in the [ Experiment 1 ]. Condition as to running by the sailing instrument was the same as the [ Experiment 1 ] except the tension. The examples 9 --- 15 were running under the tension of 20 gf, and the examples 16 --- 18 were running under the tension of 40 gf. The value of $\mu$k was measured at first transit and number of repeating transits of running was obtained until the value of $\mu$k began to increase. The result as to $\mu$k was also shown in the Table 4.

Table 4

| Examples | Thickness of polyimide film ($\mu$m) | Forming of the protective film | Long-chain alkyl silane | $\mu$k | Number of repeating transits | Tension (gf) |
|---|---|---|---|---|---|---|
| Example 9 | 7.5 | Deposition of Co | n-heptadecyl triethoxysilane | 0.21 | >200 | 20 |
| Example 10 | 7.5 | Deposition of Co | n-eicocyl trimethoxysilane | 0.15 | >200 | 20 |
| Example 11 | 7.5 | Oxidation in the Air | n-octadecyl trichlorosilane | 0.18 | 150 | 20 |
| Example 12 | 7.5 | Oxidation in the Air | γ-(N,N-diheptadecyl succinylamino) propyl trimethoxysilane | 0.22 | >200 | 20 |
| Example 13 | 7.5 | Oxidation in the Air | γ-(N,N-dipentadecyl succinylamino) propyl triethoxysilane | 0.25 | >180 | 20 |
| Example 14 | 10 | Oxidation in the Air | γ-[N-(octadecyl oxymethyl) methyl succinyl amino] propyl triethoxysilane | 0.24 | >200 | 20 |
| Example 15 | 10 | Oxidation in the Air | γ-[N-(octadecyl oxymethyl) methyl succinyl amino] propyl triethoxysilane | 0.20 | >200 | 20 |
| Example 16 | 10 | Deposition of Co and Ni(Co:Ni=95:5) | n-heptadecyl trichlorosilane | 0.15 | >50 | 40 |
| Example 17 | 10 | Deposition of Co and Ni(Co:Ni=95:5) | γ-[N-(octadecyl oxymethyl) methyl succinyl amino ]propyl trihydroxysilane | 0.16 | >20 | 40 |
| Example 18 | 10 | Deposition of Co and Cr(Co:Cr=90:10) | n-octadecyl trihydroxysilane | 0.20 | >40 | 40 |

From the Table 4, these examples 9 --- 18 showed improved frictional performance and wear resistance. The protective films can be formed by oxidation in atmosphere or the vapor deposition under oxygen-containing atmosphere. These protective films including Co and Ni or Co and Cr showed improved feature.

Although the invention has been described in its preferred form with a certain degree of particularity, it is understood that the present disclosure of the preferred form has been changed in the details of construction and the combination and arrangement of parts may be resorted to without departing from the spirit and the scope of the invention as hereinafter claimed.

## Claims

1. A magnetic recording medium comprising:
   a non-magnetic substrate;
   a magnetic thin film formed on said non-magnetic substrate;
   a protective film of an oxide film including Co formed on said magnetic thin film; and
   a lubricant film including a long-chain alkyl silane.

2. A magnetic recording medium in accordance with claim 1 wherein;
   said lubricant film includes at least one alkyl silane compound which has linear or branched type alkyl chains having less than 3 alkyl chains having 16 --- 24 carbon atoms and has a silane compound at its one end including at least one member selected from the group consisting of halogen, alkoxy group, carbo alkoxy group, carboxy group, hydroxy group and phenoxy group.

3. A magnetic recording medium in accordance with claim 1 or 2 wherein:
   said alkyl silane compound is a compound selected from the group consisting of $\tau$-(N-octadecyl succinylamino) propyl triethoxysilane, $\tau$-(N-heptadecyl succinylamino) propyl triethoxysilane and $\tau$-(N-eicocyl succinylamino) propyl triethoxysilane.

4. A magnetic recording medium in accordance with claim 1 or 2 wherein:
   said lubricant film includes a two-branched type alkyl silane.

5. A magnetic recording medium in accordance with claim 1 or 4 wherein:
   said alkyl silane is $\tau$-(N, N-dioctadecyl succinylamino) propyl triethoxysilane.

6. A magnetic recording medium in accordance with claim 1 or 2 wherein:
   said lubricant film includes a three-branched type alkyl silane.

7. A magnetic recording medium in accordance with claim 1 or 6 wherein:
   said alkyl silane is $\tau$-[N-[tris(heptadecyl oxymethyl)] methyl succinylamino] propyl triethoxysilane.

8. A magnetic recording medium in accordance with claim 1 wherein:
   said protective film is a Co oxide film including at least one member selected from the group consisting of Ni and Cr.

9. A magnetic recording medium in accordance with claim 1 or 8 wherein:
   said protective film includes CoO.

# FIGURE